# EUROPEAN PATENT SPECIFICATION

(11) **EP 3 215 735 B1**
(45) Date of publication and mention of the grant of the patent: **02.07.2025**
(21) Application number: 14905551.9
(22) Date of filing: 04.11.2014
(51) Int. Cl.: F03D 7/02, F03D 7/04, H02J 3/38, H02J 3/46, H02J 9/08, H02J 3/50

(54) **METHOD FOR COORDINATING CONTROL OF WIND FARM DURING A BLACK START OF AN ISLANDING OPERATION**
VERFAHREN ZUR KOORDINATION DER STEUERUNG EINES WINDPARKS BEIM SCHWARZSTART EINES INSELBETRIEBS
PROCÉDÉ DE COORDINATION DE LA COMMANDE D'UN PARC ÉOLIEN LORS D'UN REDÉMARRAGE AUTONOME EN ÎLOTAGE

(43) Date of publication of application: 13.09.2017
(73) Proprietor: Hitachi Energy Ltd, 8050 Zürich (CH)
(72) Inventor: HUANG, Xing, Beijing 100024 (CN); CHEN, Yao, 722 09 Västerås (SE)
(74) Representative: AWA Sweden AB
(86) International application number: PCT/CN2014/090225
(87) International publication number: WO 2016/070319

(56) References cited:
- EP-A1- 2 503 146
- EP-A1- 2 565 443
- EP-A1- 2 713 477
- AU-A1- 2012 358 974
- CN-A- 102 570 494
- CN-A- 103 460 545
- US-A1- 2012 146 423

## Description

### Technical Field

The invention relates to a method for coordinating control of a wind farm, and more particularly to a method for coordinating control of a wind farm during a black start of an islanding operation.

### Background Art

It has been known that in all offshore wind farms, an independent emergency source of electrical power is to be provided for-the power supply of emergency consumers, e.g. lighting and signalling systems, etc., when the main power supply fail; and the supply time period should meet the requirement from e.g. several hours to several days for different loads. Furthermore, considering the possible totally black out situation in this islanding operation, a stable black start control for offshore wind farm auxiliary power supply is also required in the electrical system.

The solution of using diesel generator sets to supply the auxiliary loads was disclosed by patent EP 1752659 B. From the teaching of the patent, the black start sequence is carried out by detecting the failure of main power supply firstly, starting the operation of emergency power supply device secondly, and thirdly increasing the wind turbine auxiliary load in a controlled manner (current limitation of emergency generator). However, in this circumstance, the charging power (capacitive reactive power) from the cable array still needs to be absorbed by the diesel generator, which will lead to the oversizing problem of the diesel generator.

To solve this oversizing problem, another solution of using wind turbine converters to absorb the reactive power from the cable system was published in patent EP 2503146 B1. According to the teaching of this patent, the black start sequence is performed by detecting the failure of main power supply firstly, starting the diesel generator secondly, connecting one wind turbine in and starting its grid-side converter to absorb the reactive power thirdly, and finally repeating step three to start the wind turbine converter one by one until every wind turbine get connected in. The solution from patent EP 2503146 B1 suffers from at least one of the disadvantages that: 1. the external generator's available capacity is not fully utilized; 2. an overshoot of the cable-generated reactive power may occur, which cannot be absorbed before switching in the wind turbine converter; 3. the cycle for completion of the black start is relatively long; 4. the external generator consumes fuel for active power supply to auxiliary load.

### Brief Summary of the Invention

It is therefore an objective of the invention to provide a method for coordinating control of a wind farm during a back start of an islanding operation.

Such method is provided in independent claim 1.

By having the method according to present invention, the external generator's available capacity can be fully utilized.

### Brief Description of the Drawings

The subject matter of the invention will be explained in more detail in the following text with reference to preferred exemplary embodiments which are illustrated in the drawings, in which:
Figure 1 schematically illustrates a wind farm according to an embodiment of present invention; and
Figure 2 is a flow chart illustrating the method for coordinating control of the wind farm during a black start of an islanding operation.
Figure 3 is an example of power limit curve of external generator provided manufactures.

The reference symbols used in the drawings, and their meanings, are listed in summary form in the list of reference symbols. In principle, identical parts are provided with the same reference symbols in the figures.

### Preferred Embodiments of the Invention

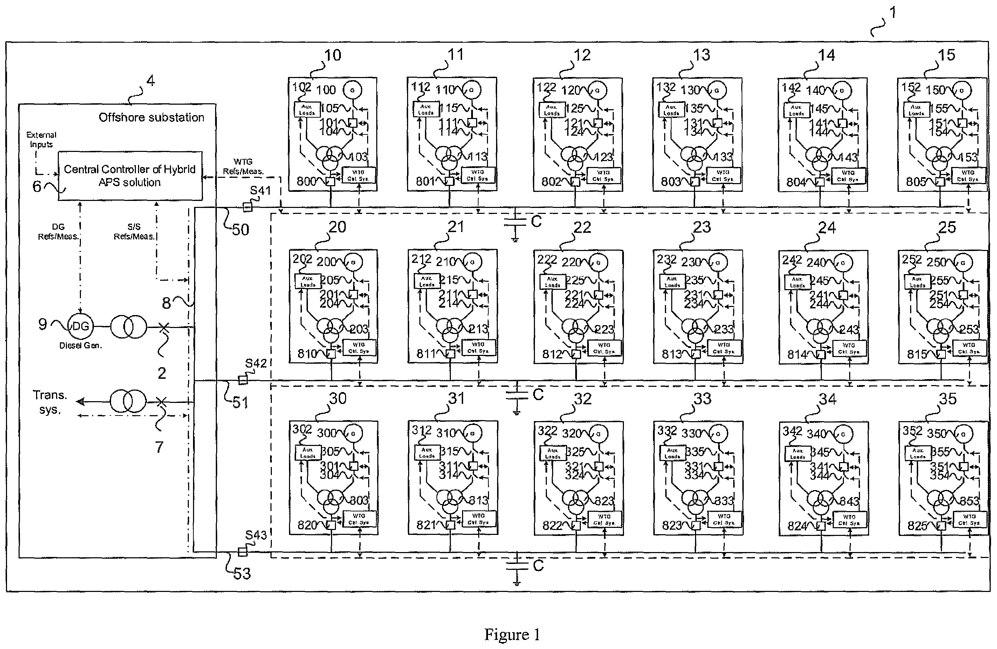

Figure 1 schematically illustrates a wind farm according to an embodiment of present invention. As shown in figure 1, the wind farm 1 includes a plurality of wind turbines 10-15, 20-25, 30-35, a substation 4, a conductor including at least one cable 50, 51, 52 and a control system 6. Each of the cables 50, 51, 52 is electrically connectable to a utility grid via a first switch 7, for example a circuit breaker. The first switch 7 can be opened when a fault in the utility grid occurred. The wind turbines are arranged in three groups, where group G1 consists of the wind turbines 10-15, group G2 consists of the wind turbines 20-25, and group G3 consists of the wind turbines 30-35.

Each of the wind turbines 10-15 of group G1 is electrically connectable to the cable 50 via respective one of second switches 800 - 805, each of the wind turbines 20-25 of group G2 is electrically connectable to the cable 51 via respective one of second switches 810-815, and each of the wind turbines 30-35 of group G3 is electrically connectable to the cable 52 via respective one of second switches 820-825. The skilled person shall understand that the number of cable can be equal or above one, and the wind turbines can be arranged in one or more group to deliver energy to the one or more cables. Where there is more than one cable 50, 51, 52, the conductor further includes a bus bar 8 arranged between the first switch 7 and the respective cable 50, 51, 52 and electrically connecting the first switch 7 and the respective cable 50, 51, 52. Between the utility grid and the first switch 7, in the substation 4 one or more transformers may be arranged to transform a voltage supplied by the wind turbines to a higher voltage, and the first switch 7 can be arranged in the substation 4 as well.

Each of wind turbines 10-15, 20-25, 30-35 includes a generator 100-150, 200-250, 300-350, a converter 101-151, 201-251, 301-351, auxiliary equipment 102-152, 202-252, 302-352, and a transformer unit 103-153, 203-253, 303-353. The transformer unit 103-153, 203-253, 303-353 has a first winding circuit electrically connectable to input of the auxiliary equipment 102-152, 202-252, 302-352, a second winding circuit electrically connectable to the converter 101-151, 201-251, 301-351 via a third switch 104-154, 204-254, 304-354, a third winding circuit electrically connectable to the respective one of at least one cable via the respective second switch 800-805, 810-815, 820-825, and the converter is electrically connectable to the generator via a fourth switch 105-155, 205-255, 305-355. The respective generator 100-150, 200-250, 300-350 can supply energy to the respective converter 101-151, 201-251, 301-351. Each converter 101-151, 201-251, 301-351 converts a generally variable frequency energy stream delivered from the generator 100-150, 200-250, 300-350 to an energy stream supplied to the respective one of the cable 50, 51, 52*.* The energy stream supplied to the respective one of the cable 50, 51, 52 is supplied via the respective third switch 104-154, 204-254, 304-354, the respective transformer unit 103-153, 203-253, 303-353 and the respective second switch 800-805, 810-815, 820-825.

The wind farm 1 also includes an external generator 9 located inside the substation 4, which can be electrically connectable to the cable 50, 51, 52 via a fifth switch 2 and the respective bus bar 8. The external generator can be for example a diesel generator. The control system 6 can control to switch the on/off state of the second switch 800-805, 810-815, 820-825, the third switch 104-154, 204-254, 304-354, the fourth switch 105-155, 205-255, 305-355, and the fifth switch 2. For example, the control system 6 can send command to the switches so that they act switching accordingly, either from on to off or vice versa. The second switch, the third switch, the fourth switch and the fifth switch can be for example circuit breaker. Cable switch S41, S42, S43, are respectively arranged to electrically connect the bus bar 8 and the respective one of the cable 50, 51, 52. The control system 6 is further adapted for controlling open/close of the cable switch S41, S42, S43 so as to electrically connect/disconnect the cables and the bus bar.

During normal operation, energy can be delivered from the respective one of the wind turbines 10-15, 20-25, 30-35 to the utility grid via the respective closed second switch 800-805, 810-815, 820-825, the respective closed third switch 104-154, 204-254, 304-354,the respective closed fourth switch 105-155, 205-255, 305-355, and the respective one of the cables 50, 51, 52, and the closed first switch 7.

The cables 50, 51, 52 comprise distributed capacitance which may result in generation of reactive power. The effect of the distributed capacitance is denoted by capacitor C besides the respective cable.

During a fault condition, the first switch 7 can be opened such that the wind turbines 10-15, 20-25, 30-35 are electrically disconnected to the utility grid. For example, the circuit breaker automatically opens to protect an electrical circuit from damage caused by overload or short circuit. Further, all of the second switches 800-805, 810-815, 820-825 connecting the wind turbines 10-15, 20-25, 30-35 to the cables 50, 51, 52 will be opened as well. So can be the third switch 104-154, 204-254, 304-354 and the fourth switch 105-155, 205-255, 305-355 and the cable switch S41, S42, S43.

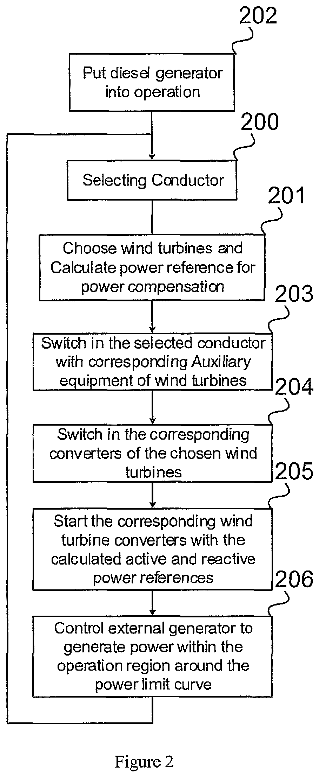

Following that, generally speaking, the diesel generator 9 can be started up to supply the auxiliary loads of the wind turbines 10-15, 20-25, 30-35 in the wind farm 1 during black start of islanding operation caused by the failure. The supply of energy by the external generator 9 to the auxiliary equipment of the wind turbines can be controlled by the control system 6 commanding different on/off status of the second switch 800-805, 810-815, 820-825, the third switch 104-154, 204-254, 304-354, the fourth switch 105-155, 205-255, 305-355, and the fifth switch 2. Figure 2 is a flow chart illustrating the method for coordinating control of the wind farm during black start of islanding operation.

Step 200 is of selecting a conductor in the wind farm 1 via which the external generator 9 is electrically connectable to auxiliary equipment 102-152, 202-252, 302-352 of at least one wind turbine 10-15, 20-25, 30-35 of the wind farm 1 to deliver the active power to the auxiliary equipment of the wind turbine, wherein the selected conductor is electrically connectable to a converter of the wind turbine. For example, it can be the control system 6 selecting the conductor. The selected conductor can be any of the cables 50, 51, 52, and the selected cable 50, 51, 52 is respectively electrically connectable to the wind turbines of group G1 (wind turbines 10-15), G2 (wind turbines 20-25), G3 (wind turbines 30-35). Or it can include any two or three selected from the cables 50, 51, 52 and the bus bar 8 electrically connecting the selected cables, for example the selected conductor includes the cable 50, the cable 51 and the bus bar 8 electrically connecting the cable 50 and the cable 51, or as another example, the selected conductor includes the cable 50, the cable 51, the cable 52 and the bus bar 8 electrically connecting the cables 50, 51, 52.

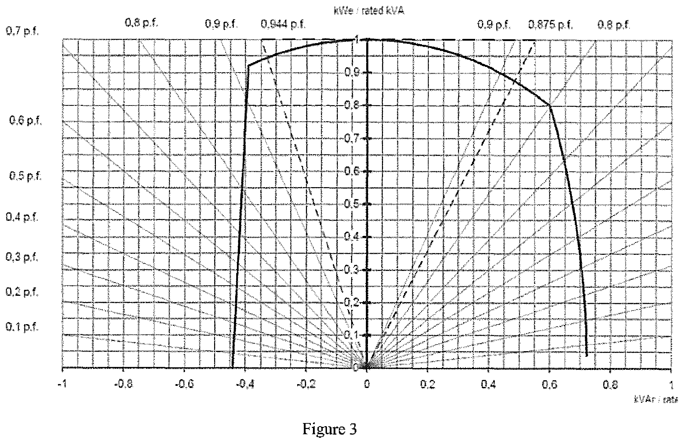

Step 201 is of choosing at least one of the wind turbines 10-15, 20-25, 30-35, wherein a converter of the chosen wind turbine can absorb a portion of an amount of reactive power generated by the selected conductor when voltage is applied between at least two parts of the selected conductor. It can be the control system 6 choosing the wind turbine. Firstly, the control system 6 can get the total value of power required by the selected conductors and the auxiliary load of the wind turbines electrically connecting to the selected conductors P_{L} and Q_{L}, which include both the steady-state amount and the peak amount of the active and reactive power generated by the conductor and required by the connected auxiliary load. Secondly, the active power output from the external generator 9 P_{DG} can be determined as P_{DG} = P_{L}; Thirdly, the maximum available reactive power output from the external generator 9 Q_{DG_max} can be determined according to the power limit curve provided by the manufacture of external generator 9, which is shown in Figure 3 as an example. If Q_{DG_max} is higher than Q_{L}, then the reactive power output from external generator 9 can be determined as Q_{DG}=Q_{L}. Fourthly, if Q_{DG_max} is smaller than Q_{L}, the control system 6 will determine the reactive power output of external generator as Q_{DG} = Q_{DG_max}, and then evaluate the reactive power generation capability Q_{W} of a single wind turbine converter based on the capacity and condition of the wind turbine, and then determine the number n of wind turbine need to be selected by using the criterion n≥ (Q_{DG_max} - Q_{L}) / Qw. By having such calculation, the capacity of the external generator 9 can be fully utilized, and the potential power overshoot of the external generator caused by the switching process of the selected conductors and the auxiliary loads can be effectively avoided.

Step 202 is of operating the external generator 9 in an operation region around power limit curve to output energy. It should be noticed, the power limit curve for external generator 9 is an adjustment parameter provided by the machine manufacture, shown in Figure 3 as an example. The area within the solid line in Figure 3 is the stable operation area for external generator 9, which means the external generator's power generation capacity can be fully used when it is kept within the operation region around the power limit curve. And furthermore, this kind of operation can provide a better power efficiency of external generator 9 and meanwhile ensure the voltage and frequency stability. [...] The diesel generator 9 is put into operation to establish the voltage and frequency of the whole system. The load of the substation 4 can be supplied by the diesel generator 9 naturally.

Step 203 is of electrically connecting the output of the external generator 9 and the auxiliary equipment of the wind turbine via the selected conductor. For example, the control system 6 can command different on/off status of the second switch 800-805, 810-815, 820-825, the third switch 104-154, 204-254, 304-354, the fourth switch 105-155, 205-255, 305-355, the fifth switch 2, and the cable switch S41, S42, S43. In particular for example, if the cable 50 of the conductor is selected in step 200, then the control system 6 can command on status of the second switch 800-805 and the fifth switch 2 and the cable switch S41 while leaving the other switches open; if the cables 50, 51 and the bus bar 8 of the conductor are selected in step 200, then the control system 6 can command on status of the second switch 800-805, 810-815 and the fifth switch 2 and the cable switch S41, S42 while leaving the other switches open; and if the cables 50, 51, 52 and the bus bar 8 of the conductor are selected in step 200, then the control system 6 can command on status of the second switch 800-805, 810-815, 820-825 and the fifth switch 2 and the cable switch S41, S42, S43 while leaving the other switches open. By closing the relevant switches, active power can be supplied to the corresponding auxiliary equipment 102-152, 202-252, 302-352.

Step 204 is of electrically connecting the output of the external generator 9 and the chosen wind turbine converter via the selected conductor. For example, if the cable 50 is selected in step S200 and wind turbine 10 is chose in step S201, then
the control system 6 can command to switching on 104 within wind turbine 10, and then finish the electrically connection of external generator 9 and the chosen wind turbine converter in wind turbine 10.

Step 205 is of absorbing by the external generator 9 and the chosen wind turbine converter the reactive power generated by the selected conductor so that an operation point of the external generator is kept within the operation region around the power limit curve. The power reference for the selected wind turbine is calculated in Step 202. By having the method according to present invention, the external generator's available capacity can be fully utilized. Preferably, an output of a generator of the chosen wind turbine is further electrically connected to the auxiliary equipment of the at least one wind turbine via the conductor to deliver active power to the auxiliary equipment of the at least one wind turbine. For example, if the cable 50 of the conductor is selected in step 200 and the wind turbine 10 is chosen, by closing the fourth switch 105, the active power generated by the generator 100 of the chosen wind turbine 10 is supplied to the auxiliary equipment 102 via the transformer unit 103 and to the auxiliary equipment 112-152 via the cable 50; if the cables 50, 51 of the conductor is selected in step 200 and the wind turbines 10, 11 are chosen, by closing the fourth switches 105, 115, the active power generated by the generators 100, 110 of the chosen wind turbines 10, 11 is supplied to the auxiliary equipment 102, 112 via the transformer units 103, 113 and to the auxiliary equipment 122-152, 202-252 via the cables 50, 51; if the cables 50, 51, 52 of the conductor is selected in step 200 and the wind turbines 10, 11 are chosen, by closing the fourth switches 105, 115, the active power generated by the generators 100, 110 of the chosen wind turbines 10, 11 is supplied to the auxiliary equipment 102, 112 via the transformer units 103, 113 and to the auxiliary equipment 122-152, 202-252, 302-352 via the cables 50, 51, 52. By having wind turbine generator supply active power to auxiliary load, the external generator fuel consumption can be reduced.

Preferably, supposing in step S201 the wind turbine 10 is chosen, the electrical connection of the external generator 9 to the auxiliary equipment 102-152 of the chosen wind turbine 10 and wind turbine 11-15 is built up via a first cable 50 of the multiple of cables 50, 51 ,52 precedes the electrical connection of the external generator 9 to the auxiliary equipment 202-252, 302-352 of the other wind turbine 20-25, 30-35 is built up via the other cable 51 , 52 of the multiple of cables. The method according to present invention further includes step S206 of the external generator 9 operating in the operation region around the power limit curve outputting active power to the auxiliary equipment 102-152 of the wind turbine 10-15 via the first cable 50. Such sequence is helpful for delivering energy to the auxiliary equipment and absorbing the cable-generated reactive power by the external generator during the initial stage of the period of black start without the assistance from the wind turbine converters.

Preferably, the selected conductor includes a first conductor and a second conductor. For example, the first conductor defines the cable 50, and the second conductor defines the cables 51, 52. The electrical connection of the output of the external generator 9 and the auxiliary equipment 102-152 of the wind turbine 10-15 is built up via the first conductor 50 by closing the fifth switch 2, the cable switch S41, the second switch 800-805; if in the step of S201 the wind turbine converter 101 is chosen, the electrical connection of the output of the external generator 9 to the chosen wind turbine converter 101 is built up via the first conductor 50 by closing the third switch 104, and consequently the electrical connection of the output of the external generator 9 and the auxiliary equipment 202-252, 302-352 of the wind turbine 20-25, 30-35 is simultaneously built up via the plurality of cables 51, 52 of the second conductor by closing the cable switch 51, 52 and the second switch 810-815, 820-825. The skilled person shall understand in the step of S201, one or more converter can be chosen from the converter 101-151 pursuant to the criteria as described above, and thus various close state of the third switch 104-154 can be arranged accordingly. Simultaneous building up of the electrical connection by the cables speeds up the black-start speed of the wind farm.

Though the present invention has been described on the basis of some preferred embodiments, those skilled in the art should appreciate that those embodiments should by no way limit the scope of the present invention which is defined by the accompanied claims.

## Claims

1. A method for coordinating control of a wind farm (1) during a black start of an islanding operation, including:
selecting a conductor (50-52) in the wind farm (1) via which an external generator (9) is electrically connectable to auxiliary equipment (102-152, 202-252, 302-352) of at least one wind turbine (10-15, 20-25, 30-35) of the wind farm (1) to deliver active power to the auxiliary equipment (102-152, 202-252, 302-352) of the at least one wind turbine (10-15, 20-25, 30-35),
wherein the selected conductor (50-52) is electrically connectable to a converter (101-151, 201-251, 301-351) of the at least one wind turbine (10-15, 20-25, 30-35);
choosing an amount n ≥ 1 of the wind turbines (10-15, 20-25, 30-35) connectable to the selected conductor (50-52), wherein a converter (101-151, 201-251, 301-351) of the n chosen wind turbines (10-15, 20-25, 30-35) can absorb a portion of an amount of reactive power generated by the selected conductor ( 50-52) when voltage is applied between at least two parts of the selected conductor (50-52);
operating the external generator (9), in an operation region defined by a power limit curve of the external generator (9) provided by the external generator manufacturer, to output energy;
electrically connecting the output of the external generator (9) and the auxiliary equipment (102-152, 202-252, 302-352) of the at least n chosen wind turbines (10-15, 20-25, 30-35) via the selected conductor (50-52);
electrically connecting the output of the external generator (9) and the converter (101-151, 201-251, 301-351) of the n chosen wind turbines (10-15, 20-25, 30-35) via the selected conductor (50-52);
and
controlling the external generator (9) and the converter of the n chosen wind turbines (101-151, 201-251, 301-351) to absorb the reactive power generated by the selected conductor so that an operation point of the external generator (9) is kept within the stable operation region;
**characterized in that** the amount n is determined according to the following procedure:
obtaining the peak active power (PL) and the peak reactive power Q_{L} of the selected conductor (50-52) and the auxiliary equipment (102-152, 202-252, 302-352) of the wind turbines (10-15, 20-25, 30-35) connectable to the selected conductor (50-52) during the black start of the islanding operation;
determining a maximum available reactive power output Q_{DG_max} of the external generator (9) in a stable operation region defined by the power limit curve of the external generator (9) provided by the external generator manufacturer;
determining that the external generator (9) outputs the obtained peak active power (P_{L});
determining the reactive power output of the external generator (9) to be said peak reactive power Q_{L} when said maximum available reactive power output Q_{DG_max} is greater than said peak reactive power Q_{L} or to be said maximum available reactive power output Q_{DG_max} when said maximum available reactive power output Q_{DG_max} is less than said peak reactive power Q_{L};
evaluating the reactive power generation capability Q_{w} of a single wind turbine converter based on the capacity and condition of the wind turbine;
determining the number n of wind turbines needed to be selected by using the criterion n ≥ (Q_{DG_max} - Q_{L}) / Qw.

2. The method according to claim 1, wherein:
the selected conductor (50-52) includes a multiple of cables;
the electrical connection of the external generator (9) to the auxiliary equipment (102-152, 202-252, 302-352) of the n chosen wind turbines (10-15, 20-25, 30-35) is built up via a first cable of the multiple of cables, the electrical connection of the external generator (9) to the auxiliary equipment (102-152, 202-252, 302-352) of the other wind turbines (10-15, 20-25, 30-35) is built up via the other cables of the multiple of cables; and
the method further includes that:
the external generator (9), operating in the stable operation region defined by the power limit curve of the external generator (9) provided by the external generator manufacturer, outputs the active power to the auxiliary equipment (102-152, 202-252, 302-352) of the n chosen wind turbines (10-15, 20-25, 30-35) via the first cable.

3. The method according to claim 1, wherein:
the selected conductor (50-52) includes a first conductor and a second conductor;
the electrical connection of the output of the external generator (9) and
the auxiliary equipment (102-152, 202-252, 302-352) of the n chosen wind turbines (10-15, 20-25, 30-35) is built up via the first conductor; and
the electrical connection of the output of the external generator (9) and the converter (101-151, 201-251, 301-351) of the n chosen wind turbines (10-15, 20-25, 30-35) is built up via the first conductor (50-52), and consequently another electrical connection of the output of the external generator (9) and the auxiliary equipment (102-152, 202-252, 302-352) of the other wind turbines (10-15, 20-25, 30-35) is simultaneously built up via the second conductor (50-52).

4. The method according to claim 1, further including:
electrically connecting an output of the generator (100-150, 200-250, 300-350) of the n chosen wind turbines (10-15, 20-25, 30-35) to the auxiliary equipment (102-152, 202-252, 302-352) of at least one of the other wind turbines (10-15, 20-25, 30-35) via the conductor (50-52) to deliver active power to the auxiliary equipment (102-152, 202-252, 302-352) of the at least one of the other wind turbines (10-15, 20-25).

## Patentansprüche

1. Verfahren zur Koordination der Steuerung eines Windparks (1) beim Schwarzstart eines Inselbetriebs, Folgendes umfassend:
Auswählen eines Leiters (50-52) im Windpark (1), über den ein externer Generator (9) mit Hilfsausrüstung (102-152, 202-252, 302-352) mindestens einer Windkraftanlage (10-15, 20-25, 30-35) des Windparks (1) elektrisch verbindbar ist, um Wirkleistung an die Hilfsausrüstung (102-152, 202-252, 302-352) der mindestens einen Windkraftanlage (10-15, 20-25, 30-35) zu liefern, wobei der ausgewählte Leiter (50-52) mit einem Umrichter (101-151, 201-251, 301-351) der mindestens einen Windkraftanlage (10-15, 20-25, 30-35) elektrisch verbindbar ist;
Auswählen einer Anzahl n ≥ 1 der Windkraftanlagen (10-15, 20-25, 30-35), die mit dem ausgewählten Leiter (50-52) verbindbar ist, wobei ein Umrichter (101-151, 201-251, 301-351) der n ausgewählten Windkraftanlagen (10-15, 20-25, 30-35) einen Teil einer Menge der Blindleistung, die von dem ausgewählten Leiter (50-52) erzeugt wird, wenn eine Spannung zwischen mindestens zwei Teilen des ausgewählten Leiters (50-52) aufgebracht wird, absorbieren kann;
Betreiben des externen Generators (9) in einem Betriebsbereich, der durch eine Grenzleistungskurve des externen Generators (9) definiert ist, die vom Hersteller des externen Generators bereitgestellt wird, um Energie abzugeben;
elektrisch Verbinden des Ausgangs des externen Generators (9) und der Hilfsausrüstung (102-152, 202-252, 302-352) der mindestens n ausgewählten Windkraftanlagen (10-15, 20-25, 30-35) über den ausgewählten Leiter (50-52); elektrisch Verbinden des Ausgangs des externen Generators (9) und des Umrichters (101-151, 201-251, 301-351) der n ausgewählten Windkraftanlagen (10-15, 20-25, 30-35) über den ausgewählten Leiter (50-52) und
Steuern des externen Generators (9) und des Umrichters der n ausgewählten Windkraftanlagen (101-151, 201-251, 301-351), um die von dem ausgewählten Leiter erzeugte Blindleistung zu absorbieren, sodass ein Betriebspunkt des externen Generators (9) innerhalb des stabilen Betriebsbereichs bleibt;
**dadurch gekennzeichnet, dass** die Anzahl n entsprechend des folgenden Vorgangs bestimmt wird:
Erhalten der Spitzenwirkleistung (P_{L}) und der Spitzenblindleistung Q_{L} des ausgewählten Leiters (50-52) und der Hilfsausrüstung (102-152, 202-252, 302-352) der Windkraftanlagen (10-15, 20-25, 30-35), die mit dem ausgewählten Leiter (50-52) verbindbar sind, beim Schwarzstart des Inselbetriebs;
Bestimmen der maximal verfügbaren Blindleistungsabgabe Q_{DG_max} des externen Generators (9) in einem stabilen Betriebsbereich, der durch die Grenzleistungskurve des externen Generators (9) definiert ist, die vom Hersteller des externen Generators bereitgestellt wird;
Bestimmen, dass der externe Generator (9) die erhaltene Spitzenwirkleistung (P_{L}) abgibt;
Bestimmen, dass die Blindleistungsabgabe des externen Generators (9) die Spitzenblindleistung Q_{L} ist, wenn die maximal verfügbare Blindleistungsabgabe Q_{DG_max} größer ist als die Spitzenblindleistung Q_{L}, oder die maximal verfügbare Blindleistungsabgabe Q_{DG_max} ist, wenn die maximal verfügbare Blindleistungsabgabe Q_{DG_max} kleiner als die Spitzenblindleistung Q_{L} ist;
Auswerten der Blindleistungserzeugungskapazität Q_{W} eines einzelnen Windkraftanlagenumrichters basierend auf der Kapazität und dem Zustand der Windkraftanlage;
Bestimmen der Anzahl n von Windkraftanlagen, die ausgewählt werden müssen, anhand des Kriteriums n ≥ (Q_{DG_max} - Q_{L}) / Q_{W}.

2. Verfahren nach Anspruch 1, wobei:
der ausgewählte Leiter (50-52) mehrere Kabel umfasst;
die elektrische Verbindung des externen Generators (9) mit der Hilfsausrüstung (102-152, 202-252, 302-352) der n ausgewählten Windkraftanlagen (10-15, 20-25, 30-35) durch ein erstes Kabel der mehreren Kabel hergestellt ist, wobei die elektrische Verbindung des externen Generators (9) mit der Hilfsausrüstung (102-152, 202-252, 302-352) der anderen Windkraftanlagen (10-15, 20-25, 30-35) durch die anderen Kabel der mehreren Kabel hergestellt ist und
wobei das Verfahren ferner umfasst, dass:
der externe Generator (9), der in dem stabilen Betriebsbereich arbeitet, der durch die Grenzleistungskurve des externen Generators (9) definiert ist, die vom Hersteller des externen Generators bereitgestellt wird, die Wirkleistung an die Hilfsausrüstung (102-152, 202-252, 302-352) der n ausgewählten Windkraftanlagen (10-15, 20-25, 30-35) über das erste Kabel abgibt.

3. Verfahren nach Anspruch 1, wobei:
der ausgewählte Leiter (50-52) einen ersten Leiter und einen zweiten Leiter umfasst;
die elektrische Verbindung des Ausgangs des externen Generators (9) und
der Hilfsausrüstung (102-152, 202-252, 302-352) der n ausgewählten Windkraftanlagen (10-15, 20-25, 30-35) durch den ersten Leiter hergestellt ist und
die elektrische Verbindung des Ausgangs des externen Generators (9) und des Umrichters (101-151, 201-251, 301-351) der n ausgewählten Windkraftanlagen (10-15, 20-25, 30-35) durch den ersten Leiter (50-52) hergestellt ist und demzufolge eine weitere elektrische Verbindung des Ausgangs des externen Generators (9) und der Hilfsausrüstung (102-152, 202-252, 302-352) der anderen Windkraftanlagen (10-15, 20-25, 30-35) gleichzeitig durch den zweiten Leiter (50-52) hergestellt ist.

4. Verfahren nach Anspruch 1, ferner Folgendes umfassend:
elektrisch Verbinden eines Ausgangs des Generators (100-150, 200-250, 300-350) der n ausgewählten Windkraftanlagen (10-15, 20-25, 30-35) mit der Hilfsausrüstung (102-152, 202-252, 302-352) mindestens einer der anderen Windkraftanlagen (10-15, 20-25, 30-35) durch den Leiter (50-52), um Wirkleistung an die Hilfsausrüstung (102-152, 202-252, 302-352) der mindestens einen der anderen Windkraftanlagen (10-15, 20-25) zu liefern.

## Revendications

1. Procédé de coordination de la commande d'un parc éolien (1) lors d'un redémarrage autonome en îlotage, comprenant les étapes consistant à :
sélectionner un conducteur (50-52) dans le parc éolien (1) par l'intermédiaire duquel un générateur extérieur (9) peut être connecté électriquement à un équipement auxiliaire (102-152, 202-252, 302-352) d'au moins une éolienne (10-15, 20-25, 30-35) du parc éolien (1) afin de délivrer une puissance active à l'équipement auxiliaire (102-152, 202-252, 302-352) de ladite au moins une éolienne (10-15, 20-25, 30-35), le conducteur sélectionné (50-52) pouvant être connecté électriquement à un convertisseur (101-151, 201-251, 301-351) de ladite au moins une éolienne (10-15, 20-25, 30-35) ;
choisir une quantité n ≥ 1 des éoliennes (10-15, 20-25, 30-35) pouvant être connectées au conducteur sélectionné (50-52), un convertisseur (101-151, 201-251, 301-351) des n éoliennes choisies (10-15, 20-25, 30-35) pouvant absorber une partie d'une quantité de puissance réactive générée par le conducteur sélectionné (50-52) lorsqu'une tension est appliquée entre au moins deux parties du conducteur sélectionné (50-52) ;
faire fonctionner le générateur extérieur (9), dans une plage de fonctionnement définie par une courbe de limite de puissance du générateur extérieur (9) fournie par le fabricant du générateur extérieur, afin de produire de l'énergie ;
connecter électriquement la sortie du générateur extérieur (9) et l'équipement auxiliaire (102-152, 202-252, 302-352) des au moins n éoliennes choisies (10-15, 20-25, 30-35) par l'intermédiaire du conducteur sélectionné (50-52) ;
connecter électriquement la sortie du générateur extérieur (9) et le convertisseur (101-151, 201-251, 301-351) des n éoliennes choisies (10-15, 20-25, 30-35) par l'intermédiaire du conducteur sélectionné (50-52) ; et commander le générateur extérieur (9) et le convertisseur des n éoliennes choisies (101-151, 201-251, 301-351) afin d'absorber la puissance réactive générée par le conducteur sélectionné de telle sorte qu'un point de fonctionnement du générateur extérieur (9) soit maintenu dans la plage de fonctionnement stable ;
**caractérisé en ce que** la quantité n est déterminée selon la procédure suivante :
obtenir la puissance active de crête (PL) et la puissance réactive de crête Q_{L} du conducteur sélectionné (50-52) et de l'équipement auxiliaire (102-152, 202-252, 302-352) des éoliennes (10-15, 20-25, 30-35) pouvant être connectées au conducteur sélectionné (50-52) lors du redémarrage autonome en îlotage ;
déterminer une sortie de puissance réactive disponible maximale Q_{DG_max} du générateur extérieur (9) dans une plage de fonctionnement stable définie par la courbe de limite de puissance du générateur extérieur (9) fournie par le fabricant du générateur extérieur ;
déterminer que le générateur extérieur (9) produit la puissance active de crête (P_{L}) obtenue ;
déterminer que la sortie de puissance réactive du générateur extérieur (9) est ladite puissance réactive de crête Q_{L} lorsque ladite sortie de puissance réactive disponible maximale Q_{DG_max} est supérieure à ladite puissance réactive de crête Q_{L}, ou qu'elle est ladite sortie de puissance réactive disponible maximale O_{DG_max} lorsque ladite sortie de puissance réactive disponible maximale Q_{DG_max} est inférieure à ladite puissance réactive de crête Q_{L} ;
évaluer la capacité de génération de puissance réactive Q_{W} d'un convertisseur d'éolienne unique en fonction de la capacité et de l'état de l'éolienne ;
déterminer le nombre n d'éoliennes devant être sélectionnées en utilisant le critère n ≥ (Q_{DG_max} - Q_{L}) / Q_{W}.

2. Procédé selon la revendication 1, dans lequel :
le conducteur sélectionné (50-52) comprend une pluralité de câbles ;
la connexion électrique du générateur extérieur (9) à l'équipement auxiliaire (102-152, 202-252, 302-352) des n éoliennes choisies (10-15, 20-25, 30-35) est établie par l'intermédiaire d'un premier câble de la pluralité de câbles, la connexion électrique du générateur extérieur (9) à l'équipement auxiliaire (102-152, 202-252, 302-352) des autres éoliennes (10-15, 20-25, 30-35) est établie par l'intermédiaire des autres câbles de la pluralité de câbles ; et
le procédé comprend en outre que :
le générateur extérieur (9), fonctionnant dans la plage de fonctionnement stable définie par la courbe de limite de puissance du générateur extérieur (9) fournie par le fabricant du générateur extérieur, produit la puissance active pour l'équipement auxiliaire (102-152, 202-252, 302-352) des n éoliennes choisies (10-15, 20-25, 30-35) par l'intermédiaire du premier câble.

3. Procédé selon la revendication 1, dans lequel :
le conducteur sélectionné (50-52) comprend un premier conducteur et un second conducteur ;
la connexion électrique de la sortie du générateur extérieur (9) et
de l'équipement auxiliaire (102-152, 202-252, 302-352) des n éoliennes choisies (10-15, 20-25, 30-35) est établie par l'intermédiaire du premier conducteur ; et
la connexion électrique de la sortie du générateur extérieur (9) et du convertisseur (101-151, 201-251, 301-351) des n éoliennes choisies (10-15, 20-25, 30-35) est établie par l'intermédiaire du premier conducteur (50-52), et par conséquent une autre connexion électrique de la sortie du générateur extérieur (9) et de l'équipement auxiliaire (102-152, 202-252, 302-352) des autres éoliennes (10-15, 20-25, 30-35) est simultanément établie par l'intermédiaire du second conducteur (50-52).

4. Procédé selon la revendication 1, comprenant en outre de :
connecter électriquement une sortie du générateur (100-150, 200-250, 300-350) des n éoliennes choisies (10-15, 20-25, 30-35) à l'équipement auxiliaire (102-152, 202-252, 302-352) d'au moins l'une des autres éoliennes (10-15, 20-25, 30-35) par l'intermédiaire du conducteur (50-52) afin de délivrer la puissance active à l'équipement auxiliaire (102-152, 202-252, 302-352) de ladite au moins une des autres éoliennes (10-15, 20-25).
